(19) Europäisches Patentamt
European Patent Office
Office européen des brevets

(11) EP 4 782 968 A1

(12) EUROPEAN PATENT APPLICATION

(43) Date of publication:
29.07.2026 Bulletin 2026/31

(21) Application number: 25215225.1

(22) Date of filing: 12.11.2025

(51) International Patent Classification (IPC):
G06F 3/01 (2006.01)    G06F 3/0354 (2013.01)

(52) Cooperative Patent Classification (CPC):
G06F 3/016; G06F 3/03545

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 28.01.2025 JP 2025012079

(71) Applicant: Lenovo Japan LLC
Tokyo 101-0021 (JP)

(72) Inventor: YOSHITOMI, Keiichi
Nishi-ku, 3-6-1-21F (JP)

(74) Representative: Openshaw & Co.
8 Castle Street
Farnham, Surrey GU9 7HR (GB)

(54) INFORMATION PROCESSING SYSTEM, INFORMATION PROCESSING METHOD, AND PROGRAM THEREFOR

(57) Provided to approximate the sensation of actually writing on a writing medium when using a pen-type input device. An information processing system is configured to detect the speed and direction of movement of the pen tip of a pen-type input device on an operable surface as contact parameters, to calculate a feedback level corresponding to the current time based on a predetermined equation using the velocity at the current time for a case of a non-reversed state where the direction is not reversed between a predetermined time previous to the current time and the current time, to calculate the feedback level based on an equation into which the velocity at the current time is substituted as zero for a case of a reversed state where the direction is reversed between the predetermined time previous to the current time and the current time, and to drive a haptic reproduction unit in the pen-type input device based on the calculated feedback level.

FIG. 7

**Description**

BACKGROUND OF THE INVENTION

Field of the Invention

The present invention relates to an information processing system, an information processing method, and a program therefor.

Description of the Related Art

It is known that a pen-shaped stylus (pen-type input device) is used as an input device for an input to an interactive display system, the pen-shaped stylus enabling haptic feedback by generating vibrations through the actuation of a tactile actuator (for example, refer to PCT Japanese Translation Patent Publication No. 2017-537395).

SUMMARY OF THE INVENTION

The pen-type input device generates vibrations, thereby simulating the tactile sensation experienced when sliding a pen tip across the surface of a writing medium such as, for example, paper. Consequently, a user inputting data with the pen-type input device is able to achieve a sensation similar to writing on an actual writing medium.
When using a pen-type input device for input, it is desirable for the input experience to resemble the sensation of writing on an actual writing medium as closely as possible.
Therefore, in view of the above problem, it is an object of the present invention to provide an input experience in input using a pen-type input device as close as possible to the sensation of writing on an actual writing medium.
An information processing system according to the first aspect of the present invention includes: a contact parameter detection unit that detects the speed and direction of movement of the pen tip of a pen-type input device on an operable surface as contact parameters; a feedback level derivation unit that acquires the velocity at predetermined time intervals and, for deriving the feedback level for each predetermined time based on the acquired velocity, calculates a feedback level corresponding to the current time based on a predetermined equation using the velocity at the current time for the case of a non-reversed state where the direction is not reversed between a predetermined time previous to the current time and the current time and calculates the feedback level based on the equation into which the velocity at the current time is substituted as zero for the case of a reversed state where the direction is reversed between the predetermined time previous to the current time and the current time; and a drive control unit that drives a haptic reproduction unit in the pen-type input device based on the feedback level calculated by the feedback level derivation unit.
An information processing method, in an information processing system, according to the second aspect of the present invention includes: a contact parameter detection step in which a contact parameter detection unit detects the speed and direction of movement of the pen tip of a pen-type input device on an operable surface as contact parameters; a feedback level derivation step in which a feedback level derivation unit acquires the velocity at predetermined time intervals and, for deriving the feedback level for each predetermined time based on the acquired velocity, calculates a feedback level corresponding to the current time based on a predetermined equation using the velocity at the current time for the case of a non-reversed state where the direction is not reversed between a predetermined time previous to the current time and the current time and calculates the feedback level based on the equation into which the velocity at the current time is substituted as zero for the case of a reversed state where the direction is reversed between the predetermined time previous to the current time and the current time; and a drive control step in which a drive control unit drives a haptic reproduction unit in the pen-type input device based on the feedback level calculated by the feedback level derivation unit.
In a computer serving as a pen-type input device in an information processing system including: an information processing apparatus that detects the velocity and direction of movement of the pen tip of a pen-type input device on an operable surface as contact parameters; and the pen-type input device that receives the contact parameters, a program according to the third aspect of the present invention enabling the computer to function as: a feedback level derivation unit that acquires the velocity at predetermined time intervals and, for deriving the feedback level for each predetermined time based on the acquired velocity, calculates a feedback level corresponding to the current time based on a predetermined equation using the velocity at the current time for the case of a non-reversed state where the direction is not reversed between a predetermined time previous to the current time and the current time and calculates the feedback level based on the equation into which the velocity at the current time is substituted as zero for the case of a reversed state where the direction is reversed between the predetermined time previous to the current time and the current time; and a drive control unit that drives a haptic reproduction unit in the pen-type input device based on the feedback level calculated by the feedback level derivation unit.

The above-described aspects of the present invention can provide the advantageous effect of approximating the sensation of writing on an actual writing medium in input using a pen-type input device.

BRIEF DESCRIPTION OF THE DRAWINGS

FIG. 1 is a diagram illustrating an example of an exterior configuration of an information processing system according to a first embodiment.

FIG. 2 is a diagram illustrating a specific example of handwriting using a pen-type input device according to the first embodiment.

FIG. 3 is a diagram illustrating an example of a velocity detected corresponding to the handwriting in FIG. 2 and a vibration intensity of the pen-type input device calculated according to the velocity.

FIG. 4 is a diagram illustrating an example of vibration intensity correction according to the first embodiment.

FIG. 5 is a diagram illustrating examples of hardware configurations of an information processing apparatus and a pen-type input device according to the first embodiment.

FIG. 6 is a diagram illustrating examples of functional configurations of the information processing apparatus and the pen-type input device according to the first embodiment.

FIG. 7 is a diagram illustrating an example of a functional configuration related to driving a vibration unit in the information processing system according to the first embodiment.

FIG. 8 is a diagram illustrating an example of processing procedures executed by the information processing apparatus and the pen-type input device according to the first embodiment in relation to haptic feedback.

FIG. 9 is a diagram illustrating an example of vibration intensity correction according to a second embodiment.

FIG. 10 is a diagram illustrating an example of processing procedures executed by an information processing apparatus and a pen-type input device according to the second embodiment in relation to haptic feedback.

DETAILED DESCRIPTION OF THE INVENTION

<First embodiment>

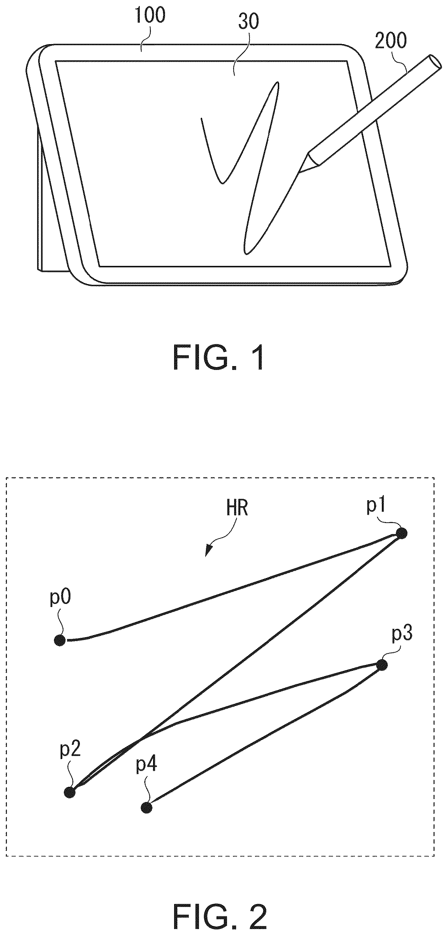

FIG. 1 illustrates an example of an exterior configuration of an information processing system according to this embodiment. As illustrated in FIG. 1, the information processing system according to this embodiment has an information processing apparatus 100 and a pen-type input device 200.

The information processing apparatus 100 is capable of performing information processing in response to input operations using the pen-type input device 200. The information processing apparatus 100 in FIG. 1 is an example of a tablet device or a laptop personal computer.

The information processing apparatus 100 includes a touch panel display unit 30. The touch panel display unit 30 is a component having a touch panel and a display unit combined. The touch panel display unit 30 displays images on a panel surface (display surface: an example of an operable surface) and enables operation by causing the panel surface to be contacted with an operating object such as a pen-type input device or a finger.

The pen-type input device 200 is a pen-type input device used by a user to operate a touch panel on the touch panel display unit 30 of the information processing apparatus 100.

The user grasps the pen-type input device 200 and moves the input device 200 while causing the pen tip to contact the panel surface of the touch panel display unit 30, thereby performing handwritten input operations for characters, pictures, shapes, and the like.

Furthermore, operations using the pen-type input device 200 may include pointing operations on a user interface image displayed on the touch panel display unit 30.

Furthermore, the detection method for the pen-type input device 200 via the touch panel in the touch panel display unit 30 of this embodiment is not particularly limited; for example, capacitive or electromagnetic induction methods may be used. The following description gives an example of using the capacitive method.

The information processing apparatus 100 has an application (pen-operable application) installed that corresponds to input operations performed by the pen-type input device 200.

The pen-operable application may be capable of performing processing such as, for example, displaying characters or drawings rendered in response to handwritten input operations such as character input or drawing performed by contacting the tip of the pen-type input device 200 against the touch panel display unit 30, or digitizing characters or drawings rendered through such operations.

Furthermore, in the information processing system of this embodiment, the pen-type input device 200 emits vibrations in response to operations performed during operations corresponding to writing (writing operations). The vibrations emitted by the pen-type input device 200 allow the user to feel a tactile sensation similar to writing on a writing medium such as, for example, paper, thereby enabling a sensation close to writing on a writing medium with an actual writing instrument.

In the following description, the generation of vibration when a writing operation is being performed using the pen-type input device 200 is also referred to as "haptic feedback." Furthermore, the control executed in response to this "haptic feedback" is also referred to as "feedback control."

The following describes the setting of vibration intensity in the feedback control of this embodiment.

FIG. 2 illustrates an example of handwriting HR generated by a writing operation performed by the user. The handwriting HR illustrated in FIG. 2 starts at starting point P0 with the pen tip moving diagonally upward to the right, reverses the left-right direction at a turning point p1 moving diagonally downward to the left, reverses the left-right direction again at a turning point p2 moving diagonally upward to the right, reverses the left-right direction once more at a turning point p3 moving diagonally downward to the left, and finally reaches an endpoint p4 where the writing is completed.

In the case of such handwriting HR, a state where the pen tip movement stops and the velocity thereof becomes zero temporarily occurs at the points p1, p2, and p3 where the movement direction of the pen tip reverses in the left-right direction. When providing the haptic feedback via vibration in response to the writing operation by which such handwriting HR is achieved, increasing the vibration intensity as the pen tip movement velocity rises facilitates the achievement of the sensation closer to writing on a writing medium with a physical writing instrument.

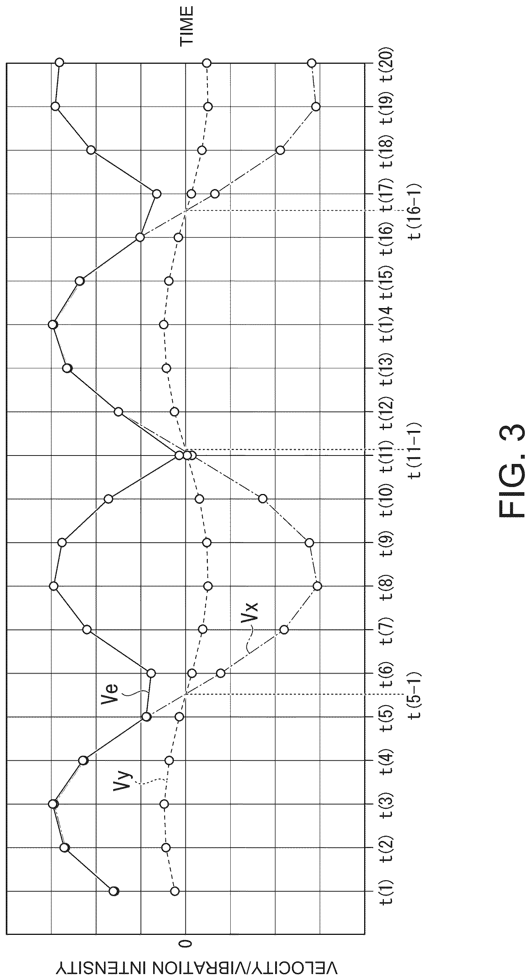

FIG. 3 illustrates a relationship between the pen tip velocity detected by the touch panel display unit 30 corresponding to the handwriting HR in FIG. 2 and the vibration intensity (calculated vibration intensity) calculated using the detected pen tip velocity.

Specifically, FIG. 3 illustrates the X-axis velocity Vx and Y-axis velocity Vy on the two-dimensional coordinate plane corresponding to the panel sensor in the touch panel display unit 30, as velocities detected at each time t(n) at predetermined time intervals. The X-axis velocity Vx is a vector quantity where, corresponding to the X-axis (horizontal direction), movement to the left is positive and movement to the right is negative, for example. The Y-axis velocity $V_Y$ is a vector quantity where, corresponding to the Y-axis direction (vertical direction), movement upward is positive and movement downward is negative, for example.

Furthermore, the calculated vibration intensity Ve illustrated in FIG. 3 is calculated using a predetermined calculation involving the X-axis velocity Vx and the Y-axis velocity Vy. For example, the calculated vibration intensity Ve[n] at time t(n) may be calculated using the following Equation 1:

$$\mathtt{Ve[n]=sqrt(x[n]^2+\ y[n]^2)\quad (Equation\ 1)}$$

In the above Equation 1, "x[n]" is the X-axis velocity Vx at time t(n), and "y[n]" is the Y-axis velocity Vy at time t(n). Equation 1 as described above corresponds to a calculation utilizing the X-axis and Y-axis velocities as scalar quantities.

As illustrated in FIG. 3, in the case of the handwriting HR in FIG. 2, the Y-axis velocity Vy exhibits little changes near zero. The X-axis velocity Vx, however, exhibits relatively large changes, with its absolute value increasing and then decreasing as the pen tip moves, becoming zero at a turning point. In this case, the calculated vibration intensity Ve calculated at each time t(n) using Equation 1 becomes a value approximating the absolute value of the X-axis velocity Vx, as illustrated.

The pen-type input device 200 vibrates with this calculated vibration intensity Ve, by which, during the writing operations of the handwriting HR in FIG. 2, relatively large vibrations occur when the left and right pen tips move along the left-right direction, while vibrations become smaller near the turning point. This variation in vibration allows the user to experience a sensation similar to writing on a writing medium with an actual writing instrument.

In this embodiment, the velocity detected by the touch panel display unit 30 is transmitted from the information processing apparatus 100 to the pen-type input device 200 at each time t(n) at the predetermined time intervals. The pen-type input device 200 is configured to calculate the calculated vibration intensity Ve at each time t(n) by substituting the velocity (X-axis velocity Vx, Y-axis velocity Vy) received at each time t(n) into Equation 1.

In this case, as apparent from FIG. 3, for example, during actual writing, the X-axis velocity Vx reverses from positive to negative at time t(5-1), between time t(5) and time t(6). In other words, at the time t(5-1), the pen tip reaches a turning point, and the velocity temporarily becomes zero. At both time t(5) and time t(6), however, the X-axis velocity Vx is not zero but has a relatively large absolute value, resulting in a relatively large calculated vibration intensity Ve.

Furthermore, in actual writing, the X-axis velocity Vx reverses from negative to positive at time t(11-1) between time t(11) and time t(12). In other words, at the time t(11-1), the pen tip reaches the turning point, thereby causing the velocity to temporarily become zero. At both the time t(11) and the time t(12), however, the X-axis velocity Vx and the Y-axis velocity Vy are non-zero, by which the calculated vibration intensity Ve also does not become zero.

Furthermore, during actual writing, the X-axis velocity Vx reverses from positive to negative at time t(16-1), between time t(16) and time t(17), thereby causing the pen tip to reach the turning point and the velocity to temporarily become zero. At both the time t(16) and the time t(17), however, the X-axis velocity Vx is non-zero and has a relatively large absolute value, by which the calculated vibration intensity Ve also has a relatively large value.

Consequently, during the periods from the time t(5) to the time t(6), from the time t(11) to the time t(12), and from the time t(16) to the time t(17), despite the pen tip actually reaching the turning point and its movement temporarily stopping during actual writing, a certain degree of vibration occurs. This state may cause the user to feel discomfort.

Therefore, in this embodiment, as described below, the calculated vibration intensity Ve is corrected to reduce the aforementioned discomfort.

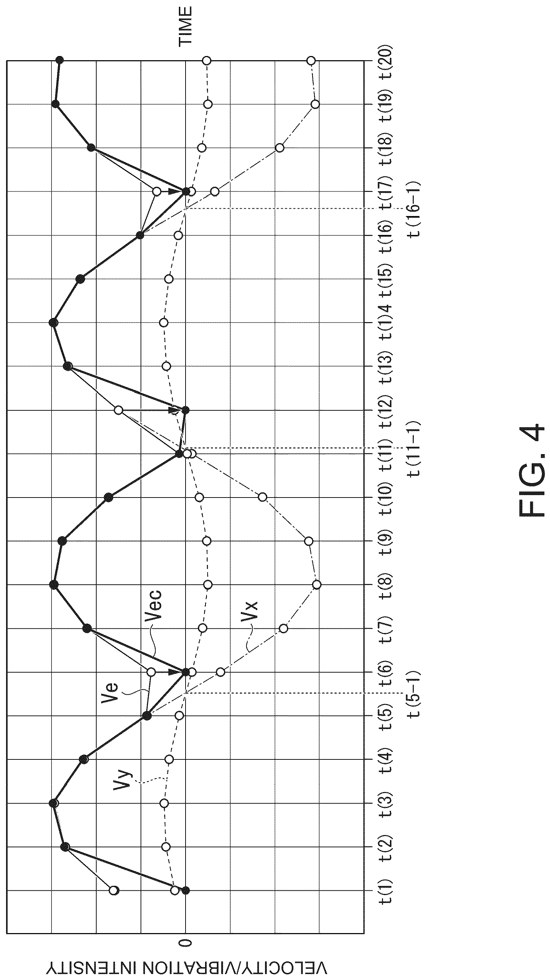

FIG. 4 illustrates an example of a correction method for the calculated vibration intensity Ve in this embodiment. FIG. 4 illustrates an X-axis velocity Vx, a Y-axis velocity Vy, and a calculated vibration intensity Ve, similar to those of FIG. 3. Furthermore, FIG. 4 illustrates a corrected vibration intensity Vec, which is the calculated vibration intensity Ve after correction.

The pen-type input device 200 of this embodiment determines whether a reversed state where positive and negative are reversed occurred for both the X-axis velocity Vx and the Y-axis velocity Vy between the previous time t(n-1) and the current time t(n) when calculating the vibration intensity at the time t(n), which is the current time. The reversed state occurring for the X-axis velocity Vx corresponds to a reversal in the direction of movement of the pen tip along the X-axis direction between the time t(n-1) and the time t(n). The reversed state occurring for the Y-axis velocity Vy corresponds to a reversal in the direction of movement of the pen tip along the Y-axis direction between the time t(n-1) and the time t(n).

When it is determined that no reversed state has occurred (it is a non-reversed state), the pen-type input device 200 calculates the corrected vibration intensity Vec by directly substituting the values of the X-axis velocity Vx and Y-axis velocity Vy received at the time t(n) into Equation 1.

On the other hand, when it is determined that a reversed state has occurred, the pen-type input device 200 converts the received X-axis velocity Vx and/or Y-axis velocity Vy at the time t(n) that were in the reversed state, to zero, and then substitutes the values into Equation 1 to calculate the corrected vibration intensity Vec.

Specifically, for example, when the time t(4) in FIG. 4 is the current time, during the period from the previous time t(3) to the time t(4), both the X-axis velocity Vx and the Y-axis velocity Vy are in a non-reversed state. In this case, the pen-type input device 200 calculates the corrected vibration intensity Vec by substituting the values of the X-axis velocity Vx and Y-axis velocity Vy received at the time t(4) into Equation 1. In this case, the calculated value is the same as the calculated vibration intensity Ve.

On the other hand, for example, when the time t(6) in FIG. 4 is the current time, during the period from the previous time t(5) to the time t(6), both the X-axis velocity Vx and the Y-axis velocity Vy are in a reversed state at the time t(5-1). In this case, the pen-type input device 200 calculates the corrected vibration intensity Vec by substituting zero as both the X-axis velocity Vx and Y-axis velocity Vy values into Equation 1, without using the values of the X-axis velocity Vx and Y-axis velocity Vy received at the time t(6). In this case, the value calculated as the corrected vibration intensity Vec, as illustrated in FIG. 4, becomes closer to zero than the calculated vibration intensity Ve calculated at the same time t(6).

Furthermore, when the time t(12) in FIG. 4 is the current time, during the period from the previous time t(11) to the time t(12), both the X-axis velocity Vx and the Y-axis velocity Vy are in the reversed state at the time t(11-1). Therefore, the pen-type input device 200 does not use the values of the X-axis velocity Vx and the Y-axis velocity Vy received at the time t(12). Instead, the pen-type input device 200 substitutes zero as both the X-axis velocity Vx and the Y-axis velocity Vy in Equation 1 to calculate the corrected vibration intensity Vec. In this case too, the value calculated as the corrected vibration intensity Vec is closer to zero than the calculated vibration intensity Ve calculated at the same time t(12).

Furthermore, when the time t(17) in FIG. 4 is the current time, during the period from the previous time t(16) to the time t(17), both the X-axis velocity Vx and the Y-axis velocity Vy are in the reversed state at the time t(16-1). Therefore, the pen-type input device 200 calculates the corrected vibration intensity Vec by substituting zero as both the X-axis velocity Vx and Y-axis velocity Vy values into Equation 1, without using the X-axis velocity Vx and Y-axis velocity Vy values received at the time t(17). In this case too, the value calculated as the corrected vibration intensity Vec is closer to zero than the calculated vibration intensity Ve calculated at the same time t(17).

The pen-type input device 200 of this embodiment performs feedback control to vibrate the pen-type input device 200 itself using the corrected vibration intensity Vec calculated as described above. This feedback control enables the vibration of the pen-type input device 200 to be reduced to zero or substantially minimized at a timing close to the turning point in the direction of the pen tip movement during actual writing. Achieving such vibration means that, when the pen tip movement temporarily halts upon reaching a turning point during actual writing, the vibration of the pen-type input device is suppressed accordingly, thereby reducing the user's sense of discomfort.

Furthermore, when the user is performing writing operations such as drawing a circle, the pen tip moves at a constant velocity above a certain level. In such situations, the positive and negative directions of the X-axis velocity and Y-axis velocity reverse at different timing points. In this case, an error occurs where the corrected vibration intensity Vec value becomes smaller because either the X-axis velocity or the Y-axis velocity is substituted into Equation 1 with a zero value, even though the pen tip is moving at a velocity above a certain level at the timing when the X-axis velocity reverses and at the timing when the positive or negative direction of the Y-axis velocity reverses.

When writing a circle, however, even in the case where the velocity of either the X-axis velocity or the Y-axis velocity reverses, the other velocity maintains a relatively large value. Therefore, the value of the corrected vibration intensity Vec does not become extremely small, and the user is less likely to feel discomfort.

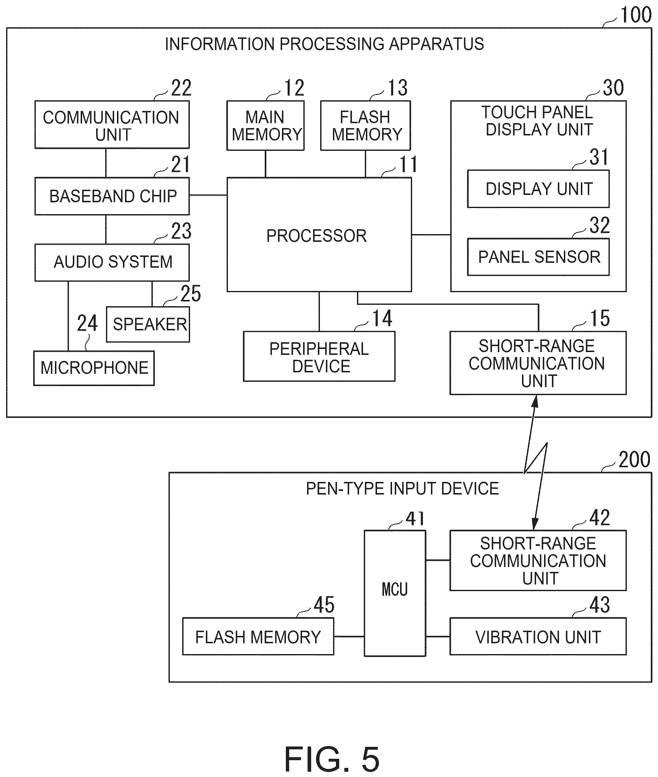

Referring to FIG. 5, examples of hardware configurations of the information processing apparatus 100 and the pen-type input device 200 are described.

First, the example of the hardware configuration of the information processing apparatus 100 is described. The information processing apparatus 100 in FIG. 5 includes a processor 11, a main memory 12, a flash memory 13, a peripheral device 14, a short-range communication unit 15, a baseband chip 21, a communication unit 22, an audio system 23, a microphone 24, a speaker 25, and a touch panel display unit 30.

The processor 11 is an application processor, for example, including a central processing unit (CPU). The processor 11 controls the entire information processing apparatus 100.

The main memory 12 is a writable memory used as a read area for the execution program of the processor 11 or as a work area for writing processing data of the execution program. The main memory 12 is, for example, composed of a plurality of dynamic random access memory (DRAM) chips. This execution program includes an operating system (OS), various device drivers for hardware operations of peripheral equipment, various services/utilities, application programs (application software), and the like.

The flash memory 13 is, for example, a flash electrically erasable programmable read-only memory (flash EEPROM), which stores the OS, various drivers, various services/utilities, application programs (hereinafter, sometimes referred to as "applications"), and various data.

The touch panel display unit 30 is a component that displays images and allows operations via the pen-type input device 200 on the panel surface where the images are displayed. The touch panel display unit 30 may also allow operations by an operating object other than the pen-type input device 200, such as, for example, a finger. The present description, however, uses the pen-type input device 200 as the operating object as an example.

The touch panel display unit 30 includes a display unit 31 and a panel sensor 32.

The display unit 31 is, for example, a liquid crystal display or an organic electro-luminescence (organic EL) display, and displays images based on drawing data (display data) output from the processor 11.

The panel sensor 32 detects the contact state of the pen tip of the pen-type input device 200 on the panel surface of the display unit 31. Specifically, the panel sensor 32 may be configured to be capable of detecting the position where the pen tip of the pen-type input device 200 is in contact on the panel surface, the pressure applied by the pen tip in contact with the panel surface, and the distance of the pen-type input device 200 from the panel surface. The detection method of the panel sensor 32 as described above is not particularly limited, but examples include a capacitive method or an electromagnetic induction method. The panel sensor 32 may also be configured by using a combination of multiple detection methods described above.

The peripheral device 14 includes, for example, a wireless local area network (WLAN) module, a global positioning system (GPS) module, and a sensor such as an accelerometer.

The audio system 23 is, for example, an audio integrated circuit (audio IC) that performs input, recording, playback, and output of audio data. For example, the microphone 24 and the speaker 25 are connected to the audio system 23. The audio system 23 outputs, for example, audio data picked up by the microphone 24 to the processor 11 or the baseband chip 21.

Furthermore, the audio system 23 converts audio data acquired from, for example, the processor 11 or the baseband chip 21 into an audio signal and outputs the audio signal to the speaker 25.

The microphone 24 picks up sounds in the vicinity of the information processing apparatus 100. The microphone 24 picks up sounds such as the user's voice, for example, when performing voice fusion with another terminal.

The speaker 25 outputs various sounds to the outside of the information processing apparatus 100. The speaker 25 outputs (emits) sound received from another terminal, for example, during voice fusion with another terminal.

The baseband chip 21 is a dedicated IC that controls wireless communications such as, for example, a fourth-generation mobile communication system (4G) or a fifth-generation mobile communication system (5G).

The baseband chip 21, for example, causes the audio system 23 to output, as sound, the audio data received by the communication unit 22 from the speaker 25.

Furthermore, the baseband chip 21, for example, acquires the audio data picked up by the microphone 24 via the audio system 23 and causes the communication unit 22 to output the audio data via the mobile communication system. Furthermore, the baseband chip 21 may be configured to exchange input/output data for data communication via the mobile communication system with the processor 11.

The communication unit 22 is a wireless communication device, including an antenna, for performing wireless communication via the mobile communication system.

The short-range communication unit 15 is, for example, a Bluetooth (registered trademark) module, and performs short-range wireless communication with the pen-type input device 200.

Next, referring again to the same FIG. 3, an example of the hardware configuration of the pen-type input device 200 will be described.

The pen-type input device 200 includes a micro controller unit (MCU) 41, a short-range communication unit 42, a vibration unit 43 (an example of a haptic reproduction unit), and a flash memory 45.

The short-range communication unit 42 is, for example, a Bluetooth (registered trademark) module, and performs short-range wireless communication with the information processing apparatus 100.

The MCU 41 includes a CPU, a memory such as a ROM and a RAM, I/O components, and performs control within the pen-type input device 200. The MCU 41 exchanges information transmitted and received by the short-range communication unit 42. Furthermore, the MCU 41 controls output of writing sounds caused by the generation of vibration by the vibration unit 43, so as to enable haptic feedback based on contact parameters detected by the information processing apparatus 100.

The vibration unit 43 is a component, for example, equipped with an actuator, which vibrates according to the control of the MCU 41.

The flash memory 45 stores various data corresponding to the pen-type input device 200, such as, for example, programs.

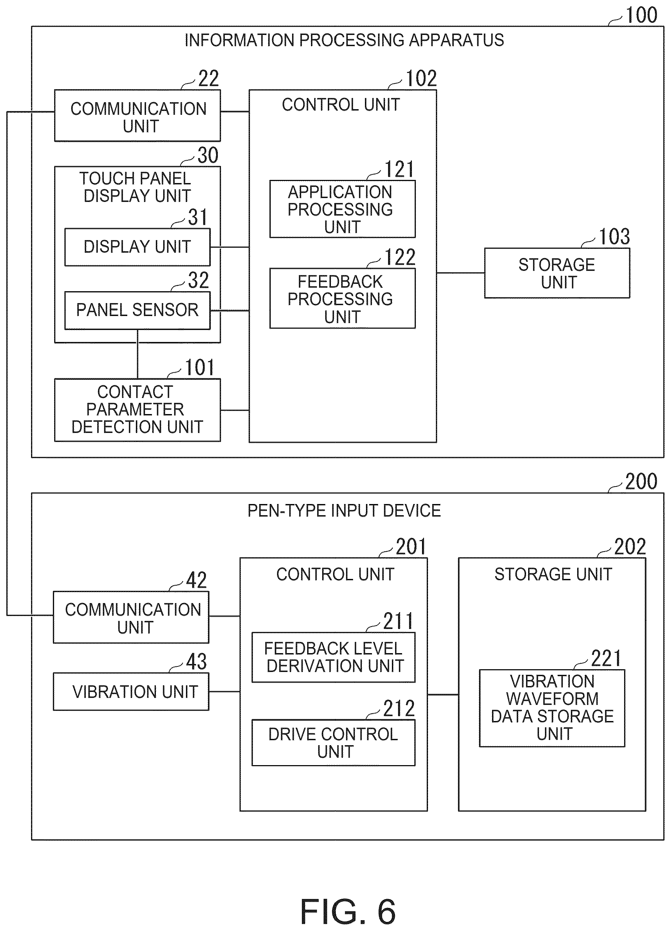

Referring to FIG. 6, examples of functional configurations of the information processing apparatus 100 and the pen-type input device 200 will be described. In FIG. 6, functional units considered to be equivalent to those in the hardware configuration of FIG. 5 are designated with the same reference numerals as in FIG. 5, and their descriptions are omitted as appropriate.

The functions of the information processing apparatus 100 in FIG. 6 may be implemented by the processor 11 (FIG. 5) executing a program.

First, an example of the functional configuration of the information processing apparatus 100 is described. The information processing apparatus 100 includes, as functional units, a communication unit 22, a touch panel display unit 30, a contact parameter detection unit 101, a control unit 102, and a storage unit 103.

The contact parameter detection unit 101 detects the contact state of the pen tip of the pen-type input device 200 against the panel surface of the touch panel display unit 30.

The contact parameter detection unit 101 outputs parameters (contact parameters) that were detected corresponding to the contact state on the basis of the detection signal output by the panel sensor 32. In the following description, the contact parameters are exemplified as, for example, velocities (X-axis velocity, Y-axis velocity) and tilt angles.

The control unit 102 performs various controls within the information processing apparatus 100. The control unit 102 includes an application processing unit 121 and a feedback processing unit 122.

The application processing unit 121 performs processing corresponding to pen-operable applications.

As an operation for the pen-operable application, when a writing operation is performed using the pen-type input device 200, pen operation information is input from the panel sensor 32 to the application processing unit 121. The application processing unit 121 performs processing such as, for example, drawing, in response to the input of the pen operation information.

The feedback processing unit 122 performs processing handled by the information processing apparatus 100 in response to feedback control. The feedback-responsive processing in this embodiment may be the processing of transmitting contact parameters detected by the contact parameter detection unit 101 from the communication unit 22 to the pen-type input device 200.

In this embodiment, the communication cycle from the information processing apparatus 100 to the pen-type input device 200 may differ from the communication cycle from the pen-type input device 200 to the information processing apparatus 100. As one specific example, the communication cycle from the information processing apparatus 100 to the pen-type input device 200 may be set to 60Hz, and the communication cycle from the pen-type input device 200 to the information processing apparatus 100 may be set to 300Hz.

The storage unit 103 stores various information corresponding to the information processing apparatus 100.

Subsequently, an example of the functional configuration of the pen-type input device 200 is described. The functions illustrated in FIG. 6 of the pen-type input device 200 may be implemented by the MCU 41 (FIG. 5) executing a program.

The pen-type input device 200 includes, as functional units, a short-range communication unit 42, a vibration unit 43, a control unit 201, and a storage unit 202.

The control unit 201 performs various controls within the pen-type input device 200. The control unit 201 includes a feedback level derivation unit 211 and a drive control unit 212.

The feedback level derivation unit 211 derives a feedback level. The feedback level derivation unit 211 calculates the corrected vibration intensity Vec as the feedback level.

The drive control unit 212 controls the vibration unit 43 to generate vibration as haptic feedback. The drive control unit 212 drives the vibration unit 43 with the corrected vibration intensity Vec calculated by the feedback level derivation unit 211.

The storage unit 202 stores information corresponding to the pen-type input device 200. The storage unit 202 in FIG. 6 includes a vibration waveform data storage unit 221.

The vibration waveform data storage unit 221 stores vibration waveform data. The vibration waveform data is waveform data created to reproduce, via the pen-type input device 200, the vibrations generated when writing is actually performed with a writing instrument.

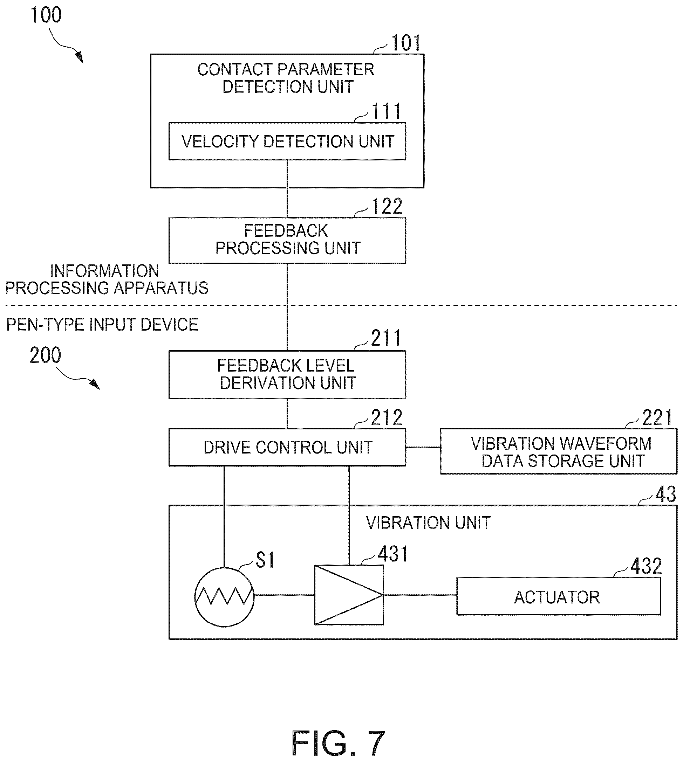

Referring to FIG. 7, an example of a functional configuration related to driving the vibration unit 43 based on the corrected vibration intensity Vec is described. In FIG. 7, identical reference numerals are used for identical parts as in FIG. 6, and their descriptions are omitted as appropriate.

In the information processing apparatus 100, the contact parameter detection unit 101 includes a velocity detection unit 111.

The velocity detection unit 111 detects the pen-tip velocity as the pen tip moves while contacting the panel surface. The velocity detected by the velocity detection unit 111 is a vector quantity indicating the velocity and direction of movement of the pen tip in each of the X-axis direction and the Y-axis direction.

The velocity detection unit 111 may detect the velocity on the basis of the amount of movement per unit time and the direction of movement of the pen-tip contact position detected by the panel sensor 32. The velocity detection unit 111 outputs the detected velocity to the feedback processing unit 122.

In the information processing apparatus 100, the feedback processing unit 122 transmits the contact parameters (velocity) detected by the contact parameter detection unit 101 to the pen-type input device 200 at the timing of each time t(n).

The contact parameters detected by the contact parameter detection unit 101 may be utilized by application processing unit 121 (FIG. 6) for drawing corresponding to writing.

The following describes an example of the functional configuration of the pen-type input device 200. The functions of the pen-type input device 200 illustrated in FIG. 7 may be implemented by the MCU 41 (FIG. 5) executing a program.

The pen-type input device 200 includes, as functional units, a feedback level derivation unit 211, a drive control unit 212, a vibration waveform data storage unit 221, and a vibration unit 43.

The feedback level derivation unit 211 calculates the corrected vibration intensity Vec at each time t(n) using the velocity transmitted from the information processing apparatus 100 at each time t(n).

The drive control unit 212 drives the vibration unit 43 with the corrected vibration intensity Vec calculated by the feedback level derivation unit 211.

FIG. 7 illustrates an example of the configuration of the vibration unit 43.

The vibration unit 43 includes an amplifier 431 and an actuator 432.

The drive control unit 212 inputs the vibration waveform data stored in the vibration waveform data storage unit 221 as a signal source into the amplifier 431. The drive control unit 212 sets the drive level according to the corrected vibration intensity Vec calculated by the feedback level derivation unit 211 for the amplifier 431. The amplifier 431 amplifies the input signal source at the set drive level and outputs the amplified signal source to the actuator 432. The actuator 432 vibrates with the waveform of the input signal source and the set drive level.

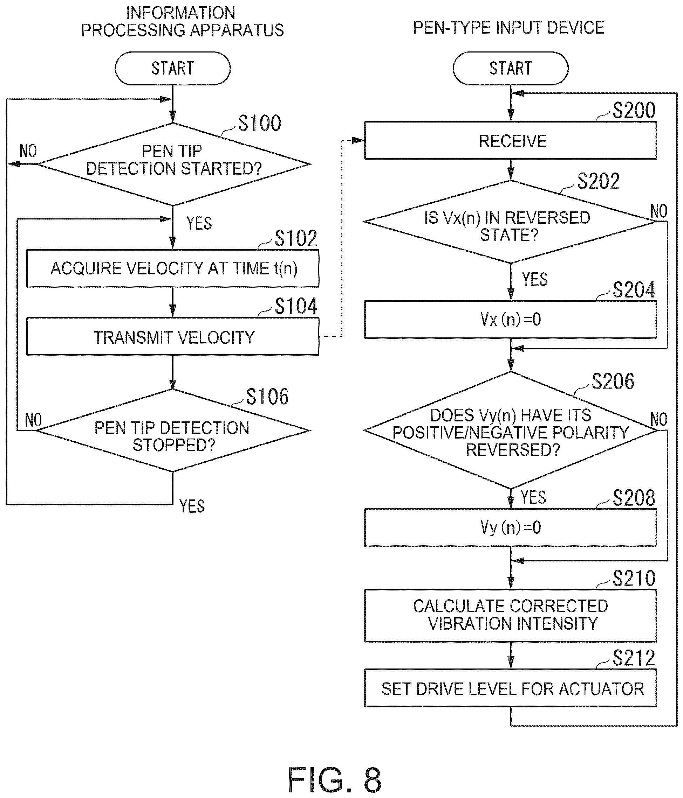

Referring to the flowchart in FIG. 8, the following describes examples of processing procedures executed by the information processing apparatus 100 and the pen-type input device 200 in relation to haptic feedback.

First, an example of the processing procedure for the information processing apparatus 100 is described. When the processing in FIG. 8 is being performed, the velocity detection unit 111 may continuously detect velocities.

First, the example of the processing procedure executed by the information processing apparatus 100 is described.

Step S100: In the information processing apparatus 100, the feedback processing unit 122 waits for the pen tip of the pen-type input device 200 to contact the panel surface and to begin moving (the movement start state), on the basis of the contact parameters acquired at the current sample timing.

In this case, the feedback processing unit 122 may determine that the pen tip has started moving, for example, due to a change in the velocity detected by the velocity detection unit 111 from zero to a value greater than zero.

Step S102: When determining in step S100 that the pen tip has started moving, the feedback processing unit 122 acquires the velocities (X-axis velocity Vx, Y-axis velocity Vx) detected by the velocity detection unit 111 at the timing of the time t(n) corresponding to the current time.

Step S104: The feedback processing unit 122 transmits the velocity acquired in step S102 to the pen-type input device 200.

Step S106: The feedback processing unit 122 determines whether the pen tip detection started in response to step S100 has stopped.

When it is determined that the pen tip detection has stopped, processing returns to step S102. In this case, the feedback processing unit 122 hereinafter repeatedly performs the processing of steps S102 to S106 until the pen tip movement stops.

On the other hand, when it is determined that the pen tip movement has stopped, processing returns to step S100. By returning to step S100 of the processing in this manner, transmission of the velocities to the pen-type input device 200 is stopped until pen tip movement starts again.

Next, the example of the processing procedure executed by the pen-type input device 200 is described.

Step S200: In the pen-type input device 200, the drive control unit 212 receives the velocities transmitted from the information processing apparatus 100 in step S104.

Step S202: Upon receiving the velocities, the feedback level derivation unit 211 in the pen-type input device 200 determines whether the X-axis velocity Vx(n) at the velocity received corresponding to the time t(n) is in the reversed state. In other words, the feedback level derivation unit 211 determines whether the X-axis velocity Vx(n) at the time t(n) has its positive/negative polarity reversed relative to the X-axis velocity Vx(n-1) at the previous time t(n-1).

Step S204: When the X-axis velocity Vx(n) is determined to be in a reversed state in step S202, the feedback level derivation unit 211 sets the X-axis velocity Vx(n) at the time t(n) to zero.

Step S206: When the X-axis velocity Vx(n) is determined to be in a non-reversed state in step S202, or after processing in step S204, the feedback level derivation unit 211 determines whether the Y-axis velocity Vy(n) at the time t(n) at the received velocity is in a reversed state. In other words, the feedback level derivation unit 211 determines whether the Y-axis velocity Vy(n) at the time t(n) has its positive/negative polarity reversed relative to the Y-axis velocity Vy(n-1) at the previous time t(n-1).

Step S208: When the Y-axis velocity Vy(n) is determined to be in a reversed state in step S206, the feedback level derivation unit 211 sets the Y-axis velocity Vy(n) at the time t(n) to zero.

Step S210: When the Y-axis velocity Vy(n) is determined to be in a non-reversed state in step S206, or after processing in step S208, the feedback level derivation unit 211 calculates the corrected vibration intensity Vec at the time t(n) by substituting the values of the X-axis velocity Vx(n) and the Y-axis velocity Vy(n) obtained through the preceding processing into Equation 1.

Step S212: The drive control unit 212 sets a drive level corresponding to the corrected vibration intensity Vec calculated in step S210 for the amplifier 431 that has received the vibration waveform data. After the processing in step S212, the processing returns to step S200.

<Second embodiment>

Subsequently, the second embodiment is described. In the example illustrated earlier in FIG. 4, the corrected vibration intensity Vec (and calculated vibration intensity Ve) calculated at the time t(11) is relatively close to zero. Also at the subsequent time t(12), however, the corrected vibration intensity Vec calculated remains zero because the velocity is in a reversed state during the period from the time t(11) to the time t(12). In this case, since the vibration of the pen-type input device 200 becomes smaller during the period from the time t(11) to the time t(12), the user may instead feel discomfort.

Therefore, the pen-type input device 200 of this embodiment is configured to calculate the corrected vibration intensity Vec as described below.

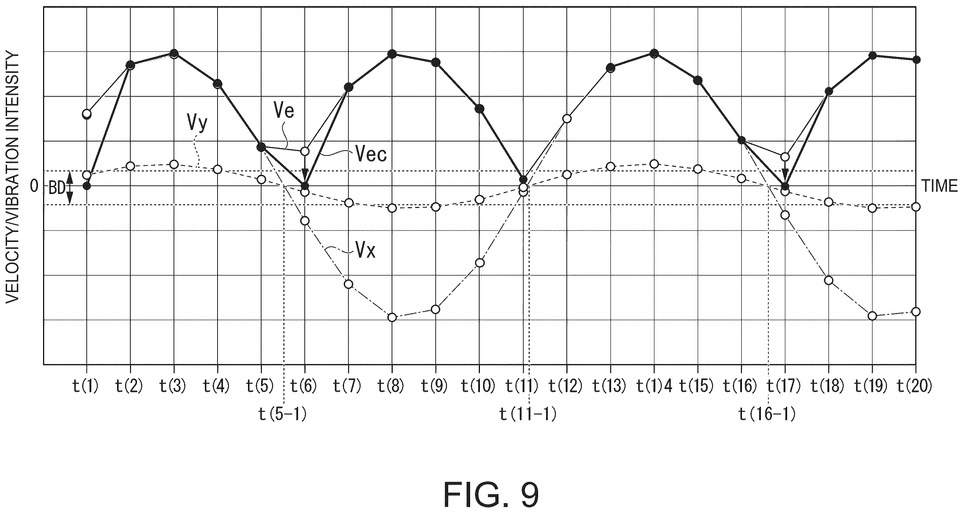

FIG. 9 illustrates the velocity (X-axis velocity Vx, Y-axis velocity Vy), calculated vibration intensity Ve, and corrected vibration intensity Vec corresponding to the calculation method for the corrected vibration intensity Vec in this embodiment. In FIG. 9, the velocity (X-axis velocity Vx, Y-axis velocity Vy) and the calculated vibration intensity Ve are the same as in FIG. 4.

As illustrated in FIG. 9, in this embodiment, a threshold range BD is set for the velocity (X-axis velocity Vx, Y-axis velocity Vy). The threshold range BD is defined as a predetermined numerical range based on a zero velocity value, including a positive region and a negative region.

Note that, although the threshold range BD in FIG. 9 has the numerical ranges for the positive region and the negative region set identically, the numerical ranges for the positive region and the negative region may be set differently.

Furthermore, although FIG. 9 illustrates an example where a common threshold range BD is set for both the X-axis velocity Vx and the Y-axis velocity Vy, separate threshold ranges may be defined for the X-axis velocity Vx and the Y-axis velocity Vy.

In this embodiment, when it is determined that a reversed state has occurred for either the X-axis velocity Vx(n) or the Y-axis velocity Vy(n) at the current time t(n), the feedback level derivation unit 211 determines whether both the X-axis velocity Vx(n-1) and the Y-axis velocity Vy(n-1) at the previous time t(n-1) are within the threshold range BD. A state where both the X-axis velocity Vx(n-1) and the Y-axis velocity Vy(n-1) are within the threshold range BD indicates that the pen-tip velocity is in a state of being considerably low (low-velocity state). Specifically, in this case, the feedback level derivation unit 211 determines whether the pen-tip velocity is in a low-velocity state.

When determining that the low-velocity state occurs at the time t(n-1), the feedback level derivation unit 211 calculates the corrected vibration intensity Vec by substituting the values of the X-axis velocity Vx(n) and Y-axis velocity Vy(n) detected by the velocity detection unit 111 into Equation 1, regardless of whether a reversed state has occurred at the current time t(n). On the other hand, when determining that the low-velocity state does not occur at the time t(n-1), the feedback level derivation unit 211 calculates the corrected vibration intensity Vec by substituting the velocity determined to be in the reversed state at the current time t(n) as zero into Equation 1.

Specifically, in the example of FIG. 9, when time t(6) is the current time, the X-axis velocity Vx and the Y-axis velocity Vy are in the reversed state during the period from the previous time t(5) to the current time t(6). At the time t(5), the Y-axis velocity Vy is within the threshold range BD, but the X-axis velocity Vx is outside the threshold range BD. In other words, both of the X-axis velocity Vx and the Y-axis velocity Vy are not within the threshold range BD. Therefore, in this case, the feedback level derivation unit 211 calculates the corrected vibration intensity Vec at the time t(6) by substituting the X-axis velocity Vx and the Y-axis velocity Vy as zero into Equation 1, similarly to the first embodiment.

Furthermore, when the time t(12) is the current time, the X-axis velocity Vx and the Y-axis velocity Vy enter a reversed state during the period from the previous time t(11) to the current time t(12). At the time t(11), both of the X-axis velocity Vx and the Y-axis velocity Vy are within the threshold range BD. Therefore, in this case, the feedback level derivation unit 211 does not set the X-axis velocity Vx and Y-axis velocity Vy to zero. Instead, the feedback level derivation unit 211 substitutes the values detected by the velocity detection unit 111 into Equation 1 to calculate the corrected vibration intensity Vec at the time t(12).

By calculating the corrected vibration intensity Vec in this manner, the corrected vibration intensity Vec no longer remains at a low value continuously during the period from the time t11 to the time t12, thereby reducing the discomfort felt by the user.

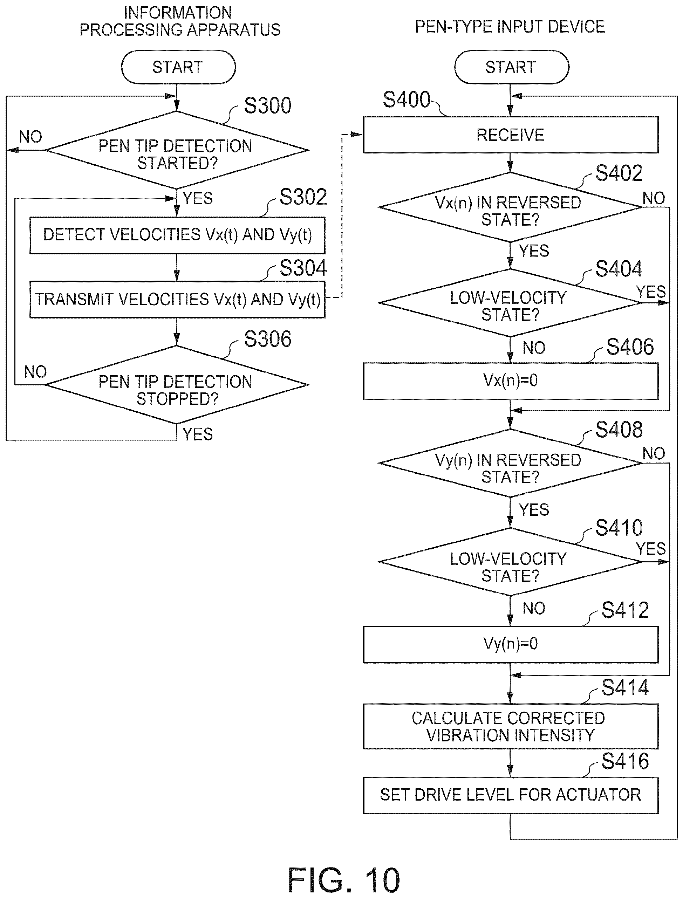

Referring to the flowchart in FIG. 10, an example of processing procedures executed by the information processing apparatus 100 and the pen-type input device 200 in relation to the haptic feedback of this embodiment is described.

The processing of the information processing apparatus 100 in steps S300 to S306 is similar to the processing of steps S100 to S106 in FIG. 8.

Subsequently, an example of processing procedures executed by the pen-type input device 200 is described.

Steps S400 and S402 are the same as steps S200 and S202 in FIG. 8.

Step S404: When the X-axis velocity Vx(n) is determined to be in a reversed state in step S402, the feedback level derivation unit 211 further determines whether a low-velocity state has occurred at the previous time t(n-1). In other words, the feedback level derivation unit 211 determines whether both of the X-axis velocity Vx(n-1) and the Y-axis velocity Vy(n-1) at the time t(n-1) are within the threshold range BD.

Step S406: When it is determined in step S404 that the low-velocity state has not occurred, the feedback level derivation unit 211 sets the X-axis velocity Vx(n) at the time t(n) to zero.

Step S408: When it is determined in step S402 that the X-axis velocity Vx(n) is not in the reversed state, and when it is determined in step S404 that the X-axis velocity Vx(n) is in the low velocity state in step S404, or after processing in step S406, the feedback level derivation unit 211 determines whether the Y-axis velocity Vy(n) in the velocity received corresponding to the time t(n) is in a reversed state.

Step S410: When the Y-axis velocity Vy(n) is determined to be in the reversed state in step S408, the feedback level derivation unit 211 further determines whether a low velocity state has occurred at the previous time t(n-1).

Step S412: When it is determined in step S410 that the low velocity state has occurred, the feedback level derivation unit 211 sets the Y-axis velocity Vy(n) at the time t(n) to zero.

When it is determined in step S408 that the Y-axis velocity Vy(n) is not in the reversed state and when it is determined in step S410 that the low-velocity state has occurred, or after processing in step S412, the feedback level derivation unit 211 performs the processing of steps S414 and S416. The processing of steps S414 and S416 is the same as the processing of steps S210 and S212 in FIG. 8.

The feedback level derivation unit 211 may be provided in the information processing apparatus 100. In this case, the feedback level derivation unit 211 may calculate the corrected vibration intensity Vec in the information processing apparatus 100, and the calculated corrected vibration intensity Vec may be transmitted from the information processing apparatus 100 to the drive control unit 212 of the pen-type input device 200. In that configuration, however, the discrepancy between the timing of drawing the trajectory corresponding to writing operations and the vibration timing of the pen-type input device 200 becomes large in some cases. To reduce such timing discrepancies, it is preferable to provide the pen-type input device 200 with the functions of the feedback level derivation unit 211, as in the above embodiments.

In each of the above embodiments, the velocity as a vector quantity detected by the velocity detection unit 111 is used to determine the occurrence of a reversed state where the detected velocity value is in a reversed state of positive and negative directions. In this embodiment, for example, in response to the movement of the pen tip, the velocity as a scalar quantity and the movement direction may each be detected in the X-axis direction and the Y-axis direction. In this case, for example, an equation for calculating the square root of the sum of the squared values of the velocity in the X-axis direction and the velocity in the Y-axis direction may be used to calculate the corrected vibration intensity Vec by substituting the corresponding axial velocity as zero in response to the occurrence of the reversed state where the detected movement direction is reversed.

Furthermore, the haptic feedback may be provided not only by vibration but also by sound. The sound may be output from the pen-type input device 200 or from the information processing apparatus 100. In this case, the sound level may also be corrected using control similar to that for the corrected vibration intensity Vec.

Furthermore, the above processing of the above information processing apparatus 100 and pen-type input device 200 may be performed by recording a program for implementing the functions of the information processing apparatus 100 and pen-type input device 200 described above on a computer-readable recording medium, loading the program recorded on the recording medium into a computer system, and executing the program. Note here that "loading the program recorded on the recording medium into a computer system and executing the program" includes installing the program on the computer system. The term "computer system" herein includes hardware such as an OS and peripheral equipment. Furthermore, the term "computer system" may include a plurality of computer devices connected via a network including communication lines such as the Internet, WAN, LAN, or dedicated lines. Furthermore, the term "computer-readable recording medium" refers to a portable medium such as a flexible disk, a magneto-optical disk, a ROM, or a CD-ROM, and to a storage device such as a hard disk built into a computer system. Thus, the recording medium storing the program may be non-volatile recording medium such as a CD-ROM. Furthermore, the recording medium includes a recording medium provided internally or externally that is accessible from a distribution server for distributing the program. The program code stored on the recording medium of the distribution server may differ from the program code in a form executable on a terminal device. In other words, as long as the program code is able to be downloaded from the distribution server and installed in a form executable on the terminal device, the format in which the program code is stored on the distribution server is not restricted. Furthermore, the program may be divided into a plurality of parts, downloaded at different times, and then combined on the terminal device. The distribution servers delivering respective parts of the divided program may also be different. Moreover, the term "computer-readable recording medium" shall also include volatile memory (RAM) or the like within a computer system acting as a server or client when a program is transmitted via a network, which holds the program for a certain period of time. Moreover, the aforementioned program may be designed to implement only some of the above-described functions. Furthermore, the program may be a so-called differential file (differential program) capable of implementing the described functions in combination with a program already recorded in the computer system.

Description of Symbols

| | |
|----|----|
| 11 | processor |
| 12 | main memory |
| 13 | flash memory |
| 14 | peripheral device |
| 15 | short-range communication unit |
| 21 | baseband chip |
| 22 | communication unit |
| 23 | audio system |
| 24 | microphone |
| 25 | speaker |
| 30 | touch panel display unit |
| 31 | display unit |
| 32 | panel sensor |
| 42 | short-range communication unit |
| 43 | vibration unit |
| 45 | flash memory |
| 100 | information processing apparatus |
| 101 | contact parameter detection unit |
| 102 | control unit |
| 103 | storage unit |
| 111 | velocity detection unit |
| 121 | application processing unit |
| 122 | feedback processing unit |
| 200 | pen-type input device |
| 201 | control unit |
| 202 | storage unit |
| 211 | feedback level derivation unit |
| 212 | drive control unit |
| 221 | vibration waveform data storage unit |
| 431 | amplifier |

432    actuator

**Claims**

1. An information processing system comprising:

   a contact parameter detection unit configured to detect a velocity of a pen tip of a pen-type input device on an operable surface as contact parameters;
   a feedback level derivation unit configured to acquire the velocity at predetermined time intervals and, for deriving the feedback level for each predetermined time based on the acquired velocity, calculate a feedback level corresponding to the current time based on a predetermined equation using the velocity at the current time for the case of a non-reversed state where the direction is not reversed between a predetermined time previous to the current time and the current time and calculate the feedback level based on the equation into which the velocity at the current time is substituted as zero for the case of a reversed state where the direction is reversed between the predetermined time previous to the current time and the current time; and
   a drive control unit configured to drive a haptic reproduction unit in the pen-type input device based on the feedback level calculated by the feedback level derivation unit.

2. The information processing system according to claim 1, wherein the haptic reproduction unit comprises a vibration unit that vibrates according to the vibration intensity set as the feedback level in the pen-type input device.

3. The information processing system according to claim 1 or 2, wherein:

   the contact parameter detection unit is configured to detect the X-axis velocity and Y-axis velocity of the pen tip in the two-dimensional coordinates corresponding to the operable surface, as the velocity;
   the feedback level derivation unit is configured to calculate the feedback level using the equation for finding the square root of the sum of the squared X-axis velocity and the squared Y-axis velocity; and
   it is determined whether each velocity in the X-axis direction and in the Y-axis direction is in a reversed state or non-reversed state, and the feedback level is calculated based on the equation into which the detected value is substituted for a velocity in the non-reversed state and zero is substituted instead of the detected value for a velocity determined to be in the reversed state.

4. The information processing system according to claim 1, 2 or 3, wherein the feedback level derivation unit, in the case of the reversed state, is configured to calculate the feedback level corresponding to the current time based on the equation into which the velocity at the current time is substituted, provided that the velocity at a predetermined time prior to the current time is within a predetermined threshold range.

5. An information processing method in an information processing system, comprising:

   a contact parameter detection step in which a contact parameter detection unit detects a velocity of a pen tip of a pen-type input device on an operable surface as contact parameters;
   a feedback level derivation step in which a feedback level derivation unit acquires the velocity at predetermined time intervals and, for deriving the feedback level for each predetermined time based on the acquired velocity, calculates a feedback level corresponding to the current time based on a predetermined equation using the velocity at the current time for the case of a non-reversed state where the direction is not reversed between a predetermined time previous to the current time and the current time and calculates the feedback level based on the equation into which the velocity at the current time is substituted as zero for the case of a reversed state where the direction is reversed between the predetermined time previous to the current time and the current time; and
   a drive control step in which a drive control unit drives a haptic reproduction unit in the pen-type input device based on the feedback level calculated by the feedback level derivation unit.

6. The information processing method according to claim 5, wherein the haptic reproduction unit comprises a vibration unit that vibrates according to the vibration intensity set as the feedback level in the pen-type input device.

7. The information processing method according to claim 5 or 6, wherein:

   the contact parameter detection step further comprises detecting the X-axis velocity and Y-axis velocity of the pen tip in the two-dimensional coordinates corresponding to the operable surface, as the velocity;

the feedback level derivation step further comprises calculating the feedback level using the equation for finding the square root of the sum of the squared X-axis velocity and the squared Y-axis velocity; and

the information processing method further comprises determining whether each velocity in the X-axis direction and in the Y-axis direction is in a reversed state or non-reversed state, and the feedback level is calculated based on the equation into which the detected value is substituted for a velocity in the non-reversed state and zero is substituted instead of the detected value for a velocity determined to be in the reversed state.

8. The information processing method according to claim 5, 6 or 7, wherein the feedback level derivation step further comprises, in the case of the reversed state, calculating the feedback level corresponding to the current time based on the equation into which the velocity at the current time is substituted, provided that the velocity at a predetermined time prior to the current time is within a predetermined threshold range.

9. In a computer serving as a pen-type input device in an information processing system including: an information processing apparatus that detects a velocity of a pen tip of the pen-type input device on an operable surface as contact parameters; and the pen-type input device that receives the contact parameters, a program enabling the computer to function as:

a feedback level derivation unit that acquires the velocity at predetermined time intervals and, for deriving the feedback level for each predetermined time based on the acquired velocity, calculates a feedback level corresponding to the current time based on a predetermined equation using the velocity at the current time for the case of a non-reversed state where the direction is not reversed between a predetermined time previous to the current time and the current time and calculates the feedback level based on the equation into which the velocity at the current time is substituted as zero for the case of a reversed state where the direction is reversed between the predetermined time previous to the current time and the current time; and

a drive control unit that drives a haptic reproduction unit in the pen-type input device based on the feedback level calculated by the feedback level derivation unit.

10. The computer according to claim 9, wherein the haptic reproduction unit comprises a vibration unit that vibrates according to the vibration intensity set as the feedback level in the pen-type input device.

11. The computer according to claim 9 or 10, wherein:

the information processing apparatus detects the X-axis velocity and Y-axis velocity of the pen tip in the two-dimensional coordinates corresponding to the operable surface, as the velocity;

the feedback level derivation unit is configured to calculate the feedback level using the equation for finding the square root of the sum of the squared X-axis velocity and the squared Y-axis velocity; and

it is determined whether each velocity in the X-axis direction and in the Y-axis direction is in a reversed state or non-reversed state, and the feedback level is calculated based on the equation into which the detected value is substituted for a velocity in the non-reversed state and zero is substituted instead of the detected value for a velocity determined to be in the reversed state.

12. A pen-type input device, comprising:

a feedback level derivation unit configured to acquire a velocity of a pen tip of the pen-type input device on an operable surface as contact parameters at predetermined time intervals and, for deriving the feedback level for each predetermined time based on the acquired velocity, calculate a feedback level corresponding to the current time based on a predetermined equation using the velocity at the current time for the case of a non-reversed state where the direction is not reversed between a predetermined time previous to the current time and the current time and calculate the feedback level based on the equation into which the velocity at the current time is substituted as zero for the case of a reversed state where the direction is reversed between the predetermined time previous to the current time and the current time; and

a drive control unit configured to drive a haptic reproduction unit in the pen-type input device based on the feedback level calculated by the feedback level derivation unit.

13. The pen-type input device according to claim 12, wherein the haptic reproduction unit comprises a vibration unit configured to vibrate according to the vibration intensity set as the feedback level in the pen-type input device.

14. The pen-type input device according to claim 12 of 13, wherein:

the feedback level derivation unit is configured to calculate the feedback level using the equation for finding the square root of the sum of the squared X-axis velocity and the squared Y-axis velocity; and

it is determined whether each velocity in the X-axis direction and in the Y-axis direction is in a reversed state or non-reversed state, and the feedback level is calculated based on the equation into which the detected value is substituted for a velocity in the non-reversed state and zero is substituted instead of the detected value for a velocity determined to be in the reversed state.

15. The pen-type input device according to any one of claims 12 to 14, wherein the feedback level derivation unit, in the case of the reversed state, is configured to calculate the feedback level corresponding to the current time based on the equation into which the velocity at the current time is substituted, provided that the velocity at a predetermined time prior to the current time is within a predetermined threshold range.

FIG. 1

FIG. 2

FIG. 3

EP 4 782 968 A1

FIG. 4

INFORMATION PROCESSING APPARATUS ~100

| 22 | 12 | 13 | 30 |
|---|---|---|---|
| COMMUNICATION UNIT | MAIN MEMORY | FLASH MEMORY | TOUCH PANEL DISPLAY UNIT |

~21

BASEBAND CHIP

~23

AUDIO SYSTEM

~25

SPEAKER

24

MICROPHONE

~11

PROCESSOR

~31

DISPLAY UNIT

~32

PANEL SENSOR

~14

PERIPHERAL DEVICE

~15

SHORT-RANGE COMMUNICATION UNIT

PEN-TYPE INPUT DEVICE ~200

~41

MCU

~42

SHORT-RANGE COMMUNICATION UNIT

~45

FLASH MEMORY

~43

VIBRATION UNIT

FIG. 5

INFORMATION PROCESSING APPARATUS ~100

COMMUNICATION UNIT ~22

CONTROL UNIT ~102

APPLICATION PROCESSING UNIT ~121

FEEDBACK PROCESSING UNIT ~122

STORAGE UNIT ~103

TOUCH PANEL DISPLAY UNIT ~30

DISPLAY UNIT ~31

PANEL SENSOR ~32

CONTACT PARAMETER DETECTION UNIT ~101

PEN-TYPE INPUT DEVICE ~200

COMMUNICATION UNIT ~42

VIBRATION UNIT ~43

CONTROL UNIT ~201

FEEDBACK LEVEL DERIVATION UNIT ~211

DRIVE CONTROL UNIT ~212

STORAGE UNIT ~202

VIBRATION WAVEFORM DATA STORAGE UNIT ~221

FIG. 6

CONTACT PARAMETER DETECTION UNIT — 101

VELOCITY DETECTION UNIT — 111

FEEDBACK PROCESSING UNIT — 122

INFORMATION PROCESSING APPARATUS

PEN-TYPE INPUT DEVICE

200

FEEDBACK LEVEL DERIVATION UNIT — 211

DRIVE CONTROL UNIT — 212

VIBRATION WAVEFORM DATA STORAGE UNIT — 221

VIBRATION UNIT — 43

S1

431

ACTUATOR — 432

100

FIG. 7

INFORMATION
PROCESSING APPARATUS

PEN-TYPE INPUT DEVICE

( START )

( START )

S100
PEN TIP
DETECTION STARTED? — NO

S200
RECEIVE

YES

S202
IS Vx(n) IN REVERSED
STATE? — NO

S102
ACQUIRE VELOCITY AT TIME t(n)

YES

S204
Vx (n)=0

S104
TRANSMIT VELOCITY

S206
DOES Vy(n) HAVE ITS
POSITIVE/NEGATIVE POLARITY
REVERSED? — NO

S106
PEN TIP DETECTION
STOPPED? — NO

YES

S208
Vy (n)=0

YES

S210
CALCULATE CORRECTED
VIBRATION INTENSITY

S212
SET DRIVE LEVEL FOR ACTUATOR

# FIG. 8

FIG. 9

EP 4 782 968 A1

INFORMATION
PROCESSING APPARATUS

PEN-TYPE INPUT DEVICE

START

START

S300

**PEN TIP DETECTION STARTED?** — NO

S400 — **RECEIVE**

YES — S302

**DETECT VELOCITIES Vx(t) AND Vy(t)**

S402 — **Vx(n) IN REVERSED STATE?** — NO

S304

**TRANSMIT VELOCITIES Vx(t) AND Vy(t)**

YES

S404 — **LOW-VELOCITY STATE?** — YES

S306

**PEN TIP DETECTION STOPPED?** — NO

NO — S406 — **Vx(n)=0**

YES

S408 — **Vy(n) IN REVERSED STATE?** — NO

YES

S410 — **LOW-VELOCITY STATE?** — YES

NO — S412 — **Vy(n)=0**

S414 — **CALCULATE CORRECTED VIBRATION INTENSITY**

S416 — **SET DRIVE LEVEL FOR ACTUATOR**

# FIG. 10

# EUROPEAN SEARCH REPORT

**Application Number**

EP 25 21 5225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/319793 A1 (YOSHITOMI KEIICHI [JP] ET AL) 26 September 2024 (2024-09-26)<br>* abstract *<br>* figures 1-9 *<br>* paragraphs [0005], [0024] - [0038], [0082] - [0090] *<br>----- | 1-15 | INV.<br>G06F3/01<br>G06F3/0354 |
| A | JP 7 562893 B1 (LENOVO SINGAPORE PTE LTD) 7 October 2024 (2024-10-07)<br>* abstract *<br>* figures 1-12 *<br>* paragraph [0006] - paragraph [0066] *<br>& US 2025/264947 A1 (YOSHITOMI KEIICHI [JP]) 21 August 2025 (2025-08-21)<br>----- | 1-15 | |
| A | US 2015/253851 A1 (OH HAE-SEOK [KR] ET AL) 10 September 2015 (2015-09-10)<br>* abstract *<br>* figures 1-13 *<br>* paragraphs [0003] - [0037] *<br>----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 8 April 2026 | Visser, Michelle L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5225

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2026

| Patent document cited in search report | Publication date | Patent family member(s) | | Publication date |
|---|---|---|---|---|
| US 2024319793 A1 | 26-09-2024 | CN | 118689326 A | 24-09-2024 |
| | | JP | 7434633 B1 | 20-02-2024 |
| | | JP | 2024135672 A | 04-10-2024 |
| | | US | 2024319793 A1 | 26-09-2024 |
| JP 7562893 B1 | 07-10-2024 | CN | 120508237 A | 19-08-2025 |
| | | JP | 7562893 B1 | 07-10-2024 |
| | | JP | 2025126577 A | 29-08-2025 |
| | | US | 2025264947 A1 | 21-08-2025 |
| US 2015253851 A1 | 10-09-2015 | CN | 104898825 A | 09-09-2015 |
| | | KR | 20150104808 A | 16-09-2015 |
| | | US | 2015253851 A1 | 10-09-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017537395 W